# EUROPÄISCHE PATENTSCHRIFT

(11) **EP 2 673 217 B1**
(45) Veröffentlichungstag und Bekanntmachung des Hinweises auf die Patenterteilung: **05.10.2016**
(21) Anmeldenummer: 12712539.1
(22) Anmeldetag: 07.02.2012
(51) Int. Cl.: B65G 1/04

(54) **REGALLAGERSYSTEM UND VERFAHREN ZUM BETREIBEN DESSELBEN**
RACK STORE SYSTEM AND METHOD FOR OPERATING IT
SYSTÈME DE STOCKAGE SUR RAYONNAGES ET SON PROCÉDÉ DE FONCTIONNEMENT

(30) Priorität: 08.02.2011 AT 1652011
(43) Veröffentlichungstag der Anmeldung: 18.12.2013
(73) Patentinhaber: TGW Mechanics GmbH, 4600 Wels (AT)
(72) Erfinder: WOLKERSTORFER, Christoph, A-4600 Wels (AT); PREIDT, Peter, A-4615 Holzhausen (AT)
(74) Vertreter: Burger, Hannes
(86) Internationale Anmeldenummer: PCT/AT2012/050016
(87) Internationale Veröffentlichungsnummer: WO 2012/106744

(56) Entgegenhaltungen:
- EP-B1- 1 716 060
- DE-A1-102009 032 406
- US-A1- 2011 008 137

## Beschreibung

Die Erfindung betrifft ein Regallagersystem und ein Verfahren zum Betreiben desselben, wie in den Oberbegriffen der Ansprüche 1 und 8 beschrieben, welche z.B. aus der DE 10 2009 032 406 A1 bekannt sind.

Aus der DE 20 2009 012 490 U1, US 2011/0008137 A1 und US 201110008138 A1 sind Regallagersysteme bekannt, welche ein Regallager mit benachbart zueinander angeordneten Lagerregalen, zwischen denen sich zumindest eine Regalgasse von einer ersten Regallagerseite zu einer zweiten Regallagerseite erstreckt und welche in übereinander liegenden Regalebenen Stellplätze für Ladegüter aufweisen, und in den Regalebenen entlang der Regalgasse verlaufende Führungsbahnen und zumindest ein entlang der Führungsbahnen verfahrbares, autonomes Förderfahrzeug zum Transport der Ladegüter zu den Stellplätzen und eine auf einer der Regallagerseiten angeordnete Förderfahrzeug-Hebevorrichtung zum Transport des Förderfahrzeuges zwischen den Regalebenen umfassen.

Die EP 1 716 060 B1 und DE 10 2009 032 406 A1 offenbaren Regallagersysteme, bei denen auf der ersten Regallagerseite eine Ladegut-Hebevorrichtung zum Transport von Ladegütern zwischen den Regalebenen und auf der zweiten Regallagerseite eine Förderfahrzeug-Hebevorrichtung zum Transport des Förderfahrzeuges zwischen den Regalebenen angeordnet sind.

Die DE 10 2009 032 406 A1 beschreibt ferner eine Förderfahrzeug-Hebevorrichtung, welche unabhängig voneinander heb- und senkbare Transportvorrichtungen zum Transport von Ladegütern zwischen den Regalebenen und eine heb- und senkbare Aufnahmevorrichtung zum Transport des Förderfahrzeuges zwischen den Regalebenen aufweist. Die Aufnahmevorrichtung ist, durch auf einer Hubplattform für die Transportvorrichtungen befestigte und einander gegenüberliegende Fahrschienen oder durch auf einer unabhängig von den Transportvorrichtungen auf einem eigenständigen Hubrahmen befestigte Fahrschienen gebildet.

Der Erfindung liegt die Aufgabe zugrunde ein Regallagersystem und ein Verfahren zum Betreiben desselben vorzusehen, das bei Steigerung der Effizienz sich dennoch einfach gestalten lässt und sich durch eine hohe Verfügbarkeit auszeichnet.

Die Aufgabe der Erfindung wird durch die Merkmale und Maßnahmen der Ansprüche 1 und 8 gelöst. Von Vorteil ist, dass gegenüber solchen aus dem Stand der Technik bekannten Förderfahrzeug-Hebevorrichtungen der steuerungstechnische als auch der mechanische Aufwand durch eine reduzierte Anzahl von Hubantrieben deutlich verringert wird. Dabei werden die ohnehin zum Transport der Ladegüter erforderlichen Transportvorrichtungen zusätzlich zur Befestigung der Fahrschienen für die Aufnahmevorrichtung verwendet. Durch unterschiedliche Ansteuerung der Hubantriebe für die Transportvorrichtungen kann nun einerseits bei asynchroner Ansteuerung der Transport der Ladegüter unabhängig voneinander in unterschiedlichen Regalebenen erfolgen und andererseits bei synchroner Ansteuerung das Förderfahrzeug zwischen den übereinander liegenden Regalebenen umgesetzt werden. Zudem können in der Aufnahmeposition des Förderfahrzeuges, in welcher sich das Förderfahrzeug auf den Fahrschienen zwischen den zu beiden Seiten der Regalgasse angeordneten Transportvorrichtungen befindet, Ladegüter einerseits zwischen der betreffenden Transportvorrichtung und dem Förderfahrzeug und andererseits über das Förderfahrzeug zwischen den Transportvorrichtungen gefördert werden. Auch wird eine verbesserte Zugänglichkeit auf das Regallager von der zweiten Regallagerseite ermöglicht, wenn die Förderfahrzeug-Hebevorrichtung mit der Ladegut-Hebevorrichtung nur auf der ersten Regallagerseite angeordnet ist.

Sind die Transportvorrichtungen mit Stauzonen ausgebildet, wie im Anspruch 2 beschrieben, können von diesen jeweils zwei, drei oder vier Ladegüter hintereinander angeordnet aufgenommen und wiederum vereinzelt abgegeben werden. Die Transportvorrichtungen sind hierzu jeweils beispielsweise durch einen Stauförderer, wie Staurollenförderer und dgl. ausgebildet.

Die unterschiedlichen Steuerungsmöglichkeiten der Hubantriebe für die Transportvorrichtungen, wie in den Ansprüchen 5 und 6 beschrieben, erlauben einerseits durch synchrone Steuerung die gleichzeitige Vertikalverstellung der Transportvorrichtungen bzw. Fahrschienen, sodass zumindest ein Förderfahrzeug auf den Fahrschienen aufgenommen und zwischen den übereinander liegenden Regalebenen umgesetzt werden kann, und andererseits durch asynchrone Steuerung die gleichzeitige gegensinnige Vertikalverstellung der Transportvorrichtungen, sodass Ladegüter auf Höhe einer jeden Regalebene und einer Transportebene umgelagert werden können. Bei der synchronen Steuerung der Hubantriebe sind die Antriebsmotoren elektronisch gekoppelt und damit wird eine exakte horizontale Nivellierung der Fahrschienen erreicht. Durch die asynchrone Steuerung der Hubantriebe kann das Regallagersystem im Hinblick auf die Spielzeiten für die Ein- und Auslagerung von Ladegütern noch effizienter gestaltet werden.

Ist eine Verriegelungsvorrichtung vorgesehen, wie im Anspruch 7 beschrieben, kann das Förderfahrzeug in seiner Aufnahmeposition auf den Fahrschienen gesichert werden, sodass auch bei sehr dynamischen Verstellbewegungen der Transportvorrichtungen keine Gefahr besteht, dass sich das Förderfahrzeug aus seiner gesicherten Aufnahmeposition wegbewegt. Das Förderfahrzeug kann sowohl in Fahrrichtung als auch in Höhenrichtung gesichert gehalten werden. Dadurch wird ein störungsfreier Betrieb im Regallagersystem ermöglicht.

Denkbar ist auch ein Regallagersystem mit einem Regallager mit benachbart zueinander angeordneten Lagerregalen, zwischen denen sich zumindest eine Regalgasse von einer ersten Regallagerseite zu einer zweiten Regallagerseite erstreckt und welche in übereinander liegenden Regalebenen Stellplätze für Ladegüter aufweisen, und in den Regalebenen entlang der Regalgasse verlaufenden Führungsbahnen und zumindest einem entlang der Führungsbahnen verfahrbaren, autonomen Förderfahrzeug zum Transport der Ladegüter zu den Stellplätzen und mindestens einer auf der ersten Regallagerseite angeordneten Ladegut-Hebevorrichtung zum Transport von Stückgütern zwischen den Regalebenen und einer auf der zweiten Regallagerseite angeordneten Förderfahrzeug-Hebevorrichtung zum Transport des Förderfahrzeuges zwischen den Regalebenen, wobei an der zweiten Regallagerseite ferner eine erste Fördervorrichtung zum Antransport von Ladegütern zur Hebevorrichtung und eine zweite Fördervorrichtung zum Abtransport von Ladegütern von der Hebevorrichtung angeordnet sind. Von Vorteil ist dabei, dass die Bereitstellung von Ladegütern auf der ersten Vorzonen-Fördertechnik und auf der zweiten Vorzonen-Fördertechnik erfolgen kann und über mehrere Förderfahrzeuge das Regallager gegenüber solchen aus dem Stand der Technik bekannten Regallagersystemen in wesentlich kürzerer Zeit mit Ladegütern ausgefüllt werden kann. Ein weiterer Vorteil liegt auch darin, dass bei Betriebsstörungen einer Fördervorrichtung in einer Vorzone durch die Fördervorrichtung in der anderen Vorzone dennoch die Beschickung des Regallagers erfolgen kann.

Wenn die Förderfahrzeug-Hebevorrichtung eine heb- und senkbare Aufnahmevorrichtung zum Aufnehmen zumindest eines Förderfahrzeuges aufweist, kann das Förderfahrzeug zwischen den übereinander liegenden Regalebenen transportiert und an eine von der Steuerung definierte Regalebene abgegeben werden oder in eine Übergabe- bzw. Übernahmestellung zwischen Fördervorrichtungen transportiert und Ladegüter von einer ersten Fördervorrichtung empfangen oder auf eine zweite Fördervorrichtung abgegeben werden. Die Aufnahmevorrichtung kann ein oder mehrere Förderfahrzeuge von der jeweiligen Regalebene aufnehmen und zu einer beliebigen Regalebene transportieren. Diese Transportmöglichkeit erlaubt es nunmehr mit einer geringen Anzahl an Förderfahrzeugen auszukommen. So besteht in der Regel nicht die Notwendigkeit, dass auf allen Regalebenen gleichzeitig Ladegüter aus dem Lagerregal angefordert werden bzw. in dieses zurückgelagert werden.

Wenn das Förderfahrzeug über die Hebevorrichtung zwischen den Fördervorrichtungen derart bewegbar ist, dass das Förderfahrzeug einen Förderweg zwischen den Fördervorrichtungen bildet, ist es möglich, dass ein oder mehrere Ladegüter über das Förderfahrzeug zwischen den Fördervorrichtungen in der zweiten Vorzone manipuliert werden können. Diese Funktionalität kann insbesondere bei "Eilaufträgen" mit Vorteil eingesetzt werden. Ist gemäß einem Kommissionierauftrag ein Ladegut erforderlich, welches sich auf der Fördertechnik zum Antransport von Ladegütern befindet, wird das Förderfahrzeug über die Förderfahrzeug-Hebevorrichtung in eine Übergabe- bzw. Übernahmestellung zwischen die Fördervorrichtungen bewegt, sodass ein oder mehrere Ladegüter ohne Ein- und Auslagervorgang (Bereitstellungsvorgang) unmittelbar von der Fördervorrichtung zum Antransport von Ladegütern auf das Förderfahrzeug und von diesem auf die Fördervorrichtung zum Abtransport von Ladegütern übergeben werden. Dadurch werden Transportstrecken für Ladegüter bei "Eilaufträgen" optimiert und wird auch die erste Vorzonen-Fördertechnik sowie das Regallagersystem entlastet. Ebenso kann die Anzahl der Bereitstellungsvorgänge durch das Förderfahrzeug reduziert werden, was sich positiv auf den Wartungsaufwand und die Standzeit des Regallagersystems auswirkt.

Wenn die Fördervorrichtungen zu beiden Seiten der Regalgasse angeordnet sind und sich die erste Fördervorrichtung in der Verlängerung des ersten Lagerregals und die zweite Fördervorrichtung in der Verlängerung des zweiten Lagerregals erstrecken, können das Förderfahrzeug in die Übergabe- bzw. Übernahmestellung zwischen die Fördervorrichtungen bewegt und die Ladegüter zuverlässig zwischen dem Förderfahrzeug und den Fördervorrichtungen manipuliert werden. Auch wird eine sehr Platz sparende Anordnung der ersten Vorzonen-Fördertechnik erreicht.

Von Vorteil ist auch, wenn auf der ersten Regallagerseite zusätzlich jeweils den Regalebenen der Lagerregale vorgelagert Pufferplätze für Ladegüter angeordnet sind, da durch die zusätzliche, stationäre und eine Vielzahl von Pufferplätzen aufweisende Pufferzone vor dem Regallager Ladegüter, welche in das Regallager noch eingelagert werden sollen oder aus dem Regallager ausgelagert wurden, temporär zwischengelagert werden können. Diese Puffermöglichkeit erlaubt es nunmehr mit einer noch geringen Anzahl an Förderfahrzeugen auszukommen.

Wenn die Ladegut-Hebevorrichtung unabhängig voneinander heb- und senkbare Aufnahmevorrichtungen, insbesondere Transportvorrichtungen, für Stückgüter aufweist, können Ladegüter zeitgleich sowohl zwischen der ersten Aufnahmevorrichtung und einem ersten Pufferplatz als auch zwischen der zweiten Aufnahmevorrichtung und einem zweiten Pufferplatz umgelagert werden. Somit wird eine hohe Umschlagleistung im Regallagersystem erreicht. Andererseits kann auch bei Betriebsstörungen an einer Aufnahmevorrichtung durch die andere Aufnahmevorrichtung dennoch die Beschickung der Pufferzone erfolgen.

Unterschiedliche vorteilhafte Anordnungen der Aufnahmevorrichtungen für die Ladegüterergeben sich,
- wenn eine erste Aufnahmevorrichtung auf einem über einen ersten Hubantrieb vertikal verstellbaren Hubrahmen und eine zweite Aufnahmevorrichtung auf einem über einen zweiten Hubantrieb vertikal verstellbaren Hubrahmen aufgebaut sind, wobei die Hubrahmen an einem einzigen Mast geführt sind oder
- wenn eine erste Aufnahmevorrichtung auf einem über einen ersten Hubantrieb vertikal verstellbaren Hubrahmen und eine zweite Aufnahmevorrichtung auf einem über einen zweiten Hubantrieb vertikal verstellbaren Hubrahmen aufgebaut sind, wobei die Hubrahmen jeweils an einem Mast geführt sind oder
- wenn eine erste Transportvorrichtung auf einem über einen ersten Hubantrieb vertikal verstellbaren Hubrahmen und eine zweite Transportvorrichtung auf einem über einen zweiten Hubantrieb vertikal verstellbaren Hubrahmen aufgebaut sind, wobei die Hubrahmen an einem einzigen Mast geführt sind oder
- wenn eine erste Transportvorrichtung auf einem über einen ersten Hubantrieb vertikal verstellbaren Hubrahmen und eine zweite Transportvorrichtung auf einem über einen zweiten Hubantrieb vertikal verstellbaren Hubrahmen aufgebaut sind, wobei die Hubrahmen jeweils an einem Mast geführt sind.
Sind die Aufnahmevorrichtungen bzw. Transportvorrichtungen an einem einzigen Mast gelagert, wird dieser vor der Regalgasse zwischen den Fördervorrichtungen der VorzonenFördertechnik platziert, sodass der vorhandene Platz optimal ausgenutzt wird. Sind hingegen die Aufnahmevorrichtungen bzw. Transportvorrichtungen jeweils an einem Mast gelagert, wird ein redundantes Beschickungssystem für Ladegüter geschaffen und führt auch ein Ausfall einer Aufnahmevorrichtung durch Betriebsstörungen nicht zu einer Unterbrechung der Beschickung der Pufferzone.

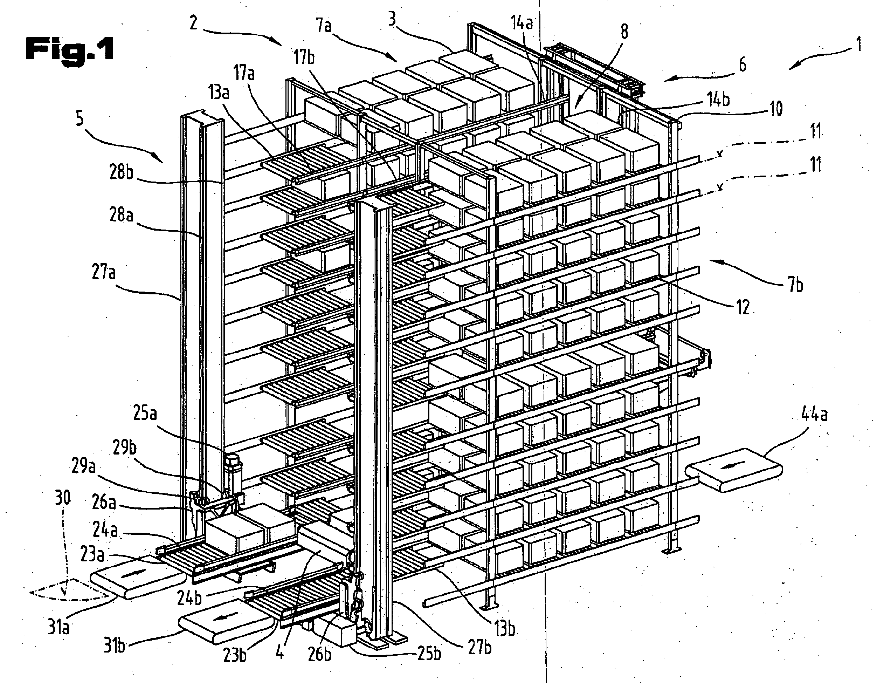

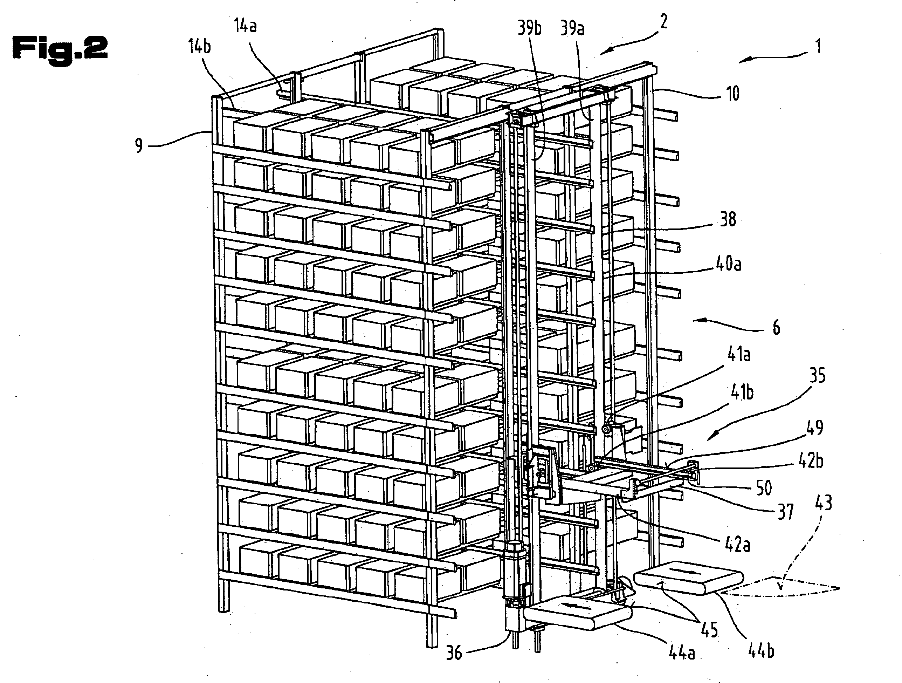

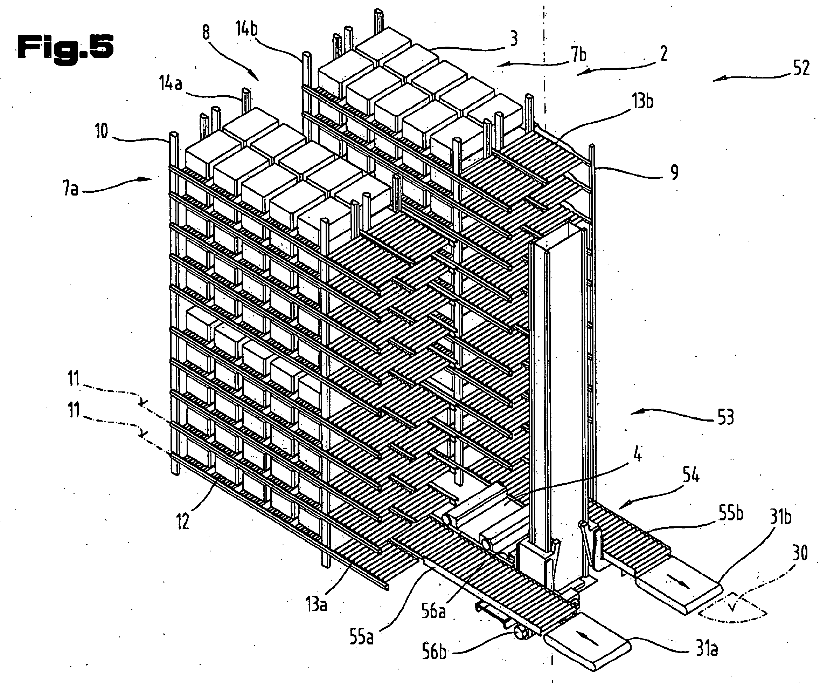

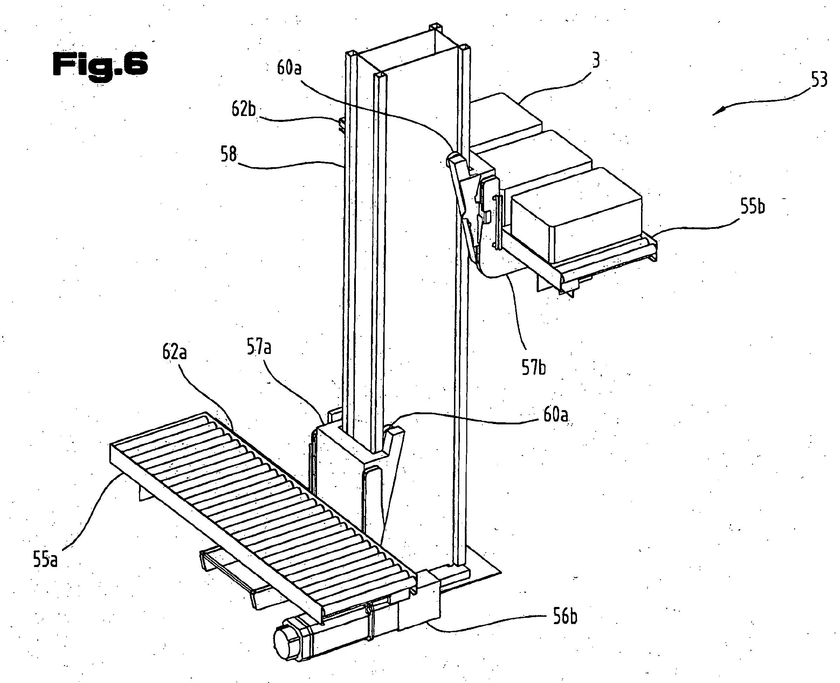

Grundsätzlich ist es von Vorteil, wenn zwei heb- und senkbare Aufnahmevorrichtungen bzw. Transportvorrichtungen (Fig. 1 bis 8) verwendet werden, da bei Ausfall einer der Aufnahmevorrichtungen die andere der Aufnahmevorrichtungen eine Doppelfunktion übernehmen kann. Hierzu ist es lediglich erforderlich, dass die Förderrichtung der Aufnahmevorrichtungen bzw. Transportvorrichtungen umkehrbar ist, wie dies durch einen reversierbaren Antriebsmotor für die Transportvorrichtungen möglich ist. Gleichermaßen sind auch an den Fördervorrichtungen in der ersten Vorzonen-Fördertechnik (Fig. 1 bis 4) und/oder an den Fördervorrichtungen der zweiten Vorzonen-Fördertechnik (Fig. 5 bis 8) die Förderrichtungen umkehrbar. So kann nun die eine "funktionsfähige" Aufnahmevorrichtung sowohl für einen Einlagerungsvorgang von Ladegütern als auch einen Auslagerungsvorgang von Ladegütern bzw. auch für einen Umlagerungsvorgang von Ladegütern zwischen dem Förderfahrzeug und der Aufnahmevorrichtung verwendet werden. Die Förderrichtungen an den Fördervorrichtungen in der ersten Vorzonen-Fördertechnik (Fig. 1 bis 4) und/oder an den Fördervorrichtungen der zweiten Vorzonen-Fördertechnik werden dementsprechend ebenfalls umgekehrt. Dadurch ist auch bei Störungsfällen dennoch eine ausreichend hohe Verfügbarkeit des Regallagersystems möglich.

Zum besseren Verständnis der Erfindung wird diese anhand der nachfolgenden Figuren näher erläutert.

Es zeigen jeweils in stark schematisch vereinfachter Darstellung:
- Fig. 1: eine erste Ausführung eines Regallagersystems, welcher kein Teil der vorliegenden Erfindung ist, mit einer Detailansicht auf die erste Regallagerseite, in perspektivischer Ansicht;
- Fig. 2: einen Ausschnitt des Regallagersystems nach Fig. 1 mit einer Detailansicht auf die zweite Regallagerseite, in perspektivischer Ansicht;
- Fig. 3: ein Ausführungsbeispiel für ein Förderfahrzeug des Regallagersystems nach Fig. 1 und Fig. 5, in perspektivischer Ansicht;
- Fig. 4: einen Ausschnitt des Regallagersystems nach Fig. 1 mit der Förderfahrzeug-Hebevorrichtung und der Vorzonen-Fördertechnik, in Draufsicht;
- Fig. 5: eine Ausführung eines erfindungsgemäßen Regallagersystems, wobei ein Förderfahrzeug in die Aufnahmevorrichtung einfährt, in perspektivischer Ansicht;
- Fig. 6: eine Ladegut-Hebevorrichtung und Förderfahrzeug-Hebevorrichtung mit Transportvorrichtungen in einer Übernahme- bzw. Übergabestellung für die Ladegüter;
- Fig. 7: eine Ladegut-Hebevorrichtung und Förderfahrzeug-Hebevorrichtung mit Transportvorrichtungen und die Aufnahmevorrichtung in einer Aufnahmestellung für ein Förderfahrzeug;
- Fig. 8: das Regallagersystem nach Fig. 5 mit der Förderfahrzeug-Hebevorrichtung und der Vorzonen-Fördertechnik, in perspektivischer Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

In den Fig. 1 bis 4 ist eine Ausführung eines Regallagersystems 1 gezeigt, welches ein Regallager 2 für Ladegüter 3, zumindest ein selbstfahrendes Förderfahrzeug 4, eine Ladegut-Hebevorrichtung 5 und eine Förderfahrzeug-Hebevorrichtung 6 umfasst. Das Regallager 2 weist in einem Abstand parallel angeordnete Lagerregale 7a, 7b auf, zwischen denen sich eine Regalgasse 8 ausgehend von einer ersten Regallagerseite 9 zu einer zweiten Regallagerseite 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 7a, 7b in den Regalebenen 11 jeweils nebeneinander und hintereinander vorgesehene Stellplätze 12 für die Ladegüter 3 aus, sodass in Tiefenrichtung der Lagerregale 7a, 7b zwei Ladegüter 3 abgestellt werden können, daher eine so genannte "doppelttiefe" Lagerung möglich ist. Andererseits ist es auch möglich, dass die Lagerregale 7a, 7b in den Regalebenen 11 jeweils ausschließlich in einer Reihe nebeneinander vorgesehene Stellplätze 12 für die Ladegüter 3 ausbilden, sodass in Tiefenrichtung der Lagerregale 7a, 7b nur ein Ladegut 3 abgestellt werden kann, daher eine so genannte "einfachtiefe" Lagerung möglich ist.

Wie in Fig. 1 ersichtlich, kann das Regallagersystem 1 auf der ersten Regallagerseite 9 zusätzlich eine Pufferzone umfassen, die jeweils den Regalebenen 11 der Lagerregale 7a, 7b vorgelagert in einer Reihe Pufferplätze 13a, 13b für zumindest ein Ladegut 3 aufweist. Die Pufferplätze 13a, 13b sind jeweils auf einer antreibbaren Förderbahn, beispielsweise einer Transportvorrichtung, wie Staurollenbahn, Staugurtförderer und dgl., ausgebildet, dessen Förderrichtung parallel zur Regalgasse 8 verläuft.

In jeder Regalebene 11 erstreckt entlang der Regalgasse 8 von der ersten Regallagerseite 9 bis zur zweiten Regallagerseite 10 eine erste Führungsbahn, entlang deren das Förderfahrzeug 4 (Shuttle) geführt bewegbar ist, um Ladegüter 3, wie beispielsweise Behälter, Kartonagen, Tablare und dgl. zu den in den Regalebenen 11 der Lagerregale 7a, 7b jeweils vorgesehenen Stellplätzen 12 anzutransportieren und von den in den Regalebenen 11 der Lagerregale 7a, 7b jeweils vorgesehenen Stellplätzen 12 abzutransportieren.

Die ersten Führungsbahnen in den Regalebenen 11 sind jeweils durch an den Lagerregalen 7a, 7b befestigte horizontale Fahrschienen 14a, 14b mit je einer Höhenführungsbahn 15 und je einer Seitenführungsbahn 16 ausgebildet.

Sind die Pufferplätze 13a, 13b vor jedem Lagerregal 7a, 7b zu beiden Seiten der Regalgasse 8 vorgesehen, sind auch in der ersten Vorzone des Regallagers 2 in jeder Regalebene 11 unmittelbar in der Verlängerung der ersten Führungsbahnen im Regallager 2 zweite Führungsbahnen vorgesehen, sodass das Förderfahrzeug 4 (Shuttle) auf Höhe der Regalebenen 11 auch zwischen den einander gegenüberliegenden Pufferplätzen 13a, 13b geführt bewegbar ist, um Ladegüter 3 zu den in den Regalebenen 11 der Lagerregale 7a, 7b jeweils vorgesehenen Pufferplätzen 13a, 13b anzutransportieren und von den in den Regalebenen 11 der Lagerregale 7a, 7b jeweils vorgesehenen Pufferplätzen 13a, 13b abzutransportieren.

Die zweiten Führungsbahnen in den Regalebenen 11 sind jeweils durch an den Transportvorrichtungen in der Pufferzone befestigte horizontale Fahrschienen 17a, 17b mit je einer Höhenführungsbahn 18 und je einer Seitenführungsbahn 19 ausgebildet.

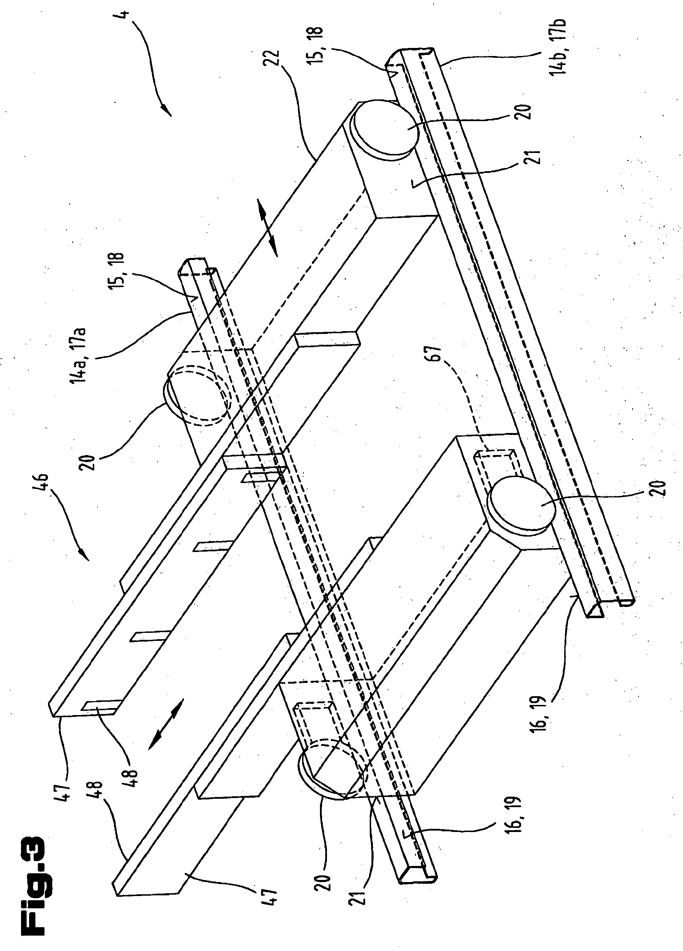

Die Fahrschienen 14a, 14b; 17a, 17b sind beispielsweise U-Profile, C-Profile und dgl. Das Förderfahrzeug 4, wie es in Fig. 3 näher dargestellt ist, weist Laufräder bzw. Antriebsräder 20 auf und kann entlang der Höhenführungsbahnen 15, 18 rollend bewegt werden. Zur Seitenführung des Förderfahrzeuges 4, ist dieses mit Seitenführungsorganen 21 versehen. Beispielsweise sind die Seitenführungsorgane 21 durch am Gehäuserahmen 22 des Förderfahrzeuges 4 ausgebildete parallele Führungsanschlagflächen gebildet, welche zwischen den Seitenführungsbahnen 16, 19 der Fahrschienen 14a, 14b; 17a, 17b positionierbar sind. Das Förderfahrzeug 4 ist ferner mit einer Lastaufnahmevorrichtung 46 zur Einlagerung/Auslagerung/Umlagerung von einem oder gleichzeitig zwei Ladegütern 3 ausgestattet, welche nach gezeigter Ausführung durch Teleskoparme 47 und jeweils an diesen angeordnete Mitnehmer 48 umfasst. Eine solche Lastaufnahmevorrichtung 46 ist beispielsweise aus der US 2005/0095095 A1 oder EP 0 647 575 A1 bekannt, und kann aufgrund der kompakten Bauweise der Teleskoparme 47 und der zuverlässigen Funktionsweise mit Vorteil eingesetzt werden.

Auf der ersten Regallagerseite 9 ist stirnseitig vor dem Regallager 2 die Ladegut-Hebevorrichtung 5 angeordnet, welche nach gezeigter Ausführung unabhängig voneinander heb- und senkbare Aufnahmevorrichtungen 23a, 23b für Stückgüter 3 aufweist.

Die Aufnahmevorrichtungen 23a, 23b umfassen jeweils eine Transportvorrichtung 24a, 24b mit einer sich parallel zur Regalgasse 8 erstreckenden Förderrichtung, wobei die erste Transportvorrichtung 24a auf einem über einen ersten Hubantrieb 25a vertikal verstellbaren Hubrahmen 26a und eine zweite Transportvorrichtung 24b auf einem über einen zweiten Hubantrieb 25b vertikal verstellbaren Hubrahmen 26b aufgebaut sind.

Nach gezeigter Ausführung ist die erste Transportvorrichtung 24a über den Hubrahmen 26a auf einem ersten Mast 27 a und die zweite Transportvorrichtung 24b über den Hubrahmen 26b auf einem zweiten Mast 27b gelagert. Der Mast 27a, 27b ist mit Führungen 28a, 28b versehen, auf welchen die Hubrahmen 26a, 26b mit Führungsrädern 29a, 29b abrollbar aufliegen. Die Transportvorrichtungen 24a, 24b sind somit unabhängig (entkoppelt) voneinander zwischen den Regalebenen 11 und auf das Höhenniveau einer jeden Regalebene 11 verstellbar, sodass Ladegüter 3, wie beispielsweise Behälter, Kartonagen, Tablare und dgl., zwischen den Transportvorrichtungen 24a, 24b und Pufferplätzen 13a, 13b gefördert werden können. Vorzugsweise sind die Transportvorrichtungen 24a, 24b jeweils durch eine antreibbare Förderbahn, wie eine Staurollenbahn, Staugurtförderer und dgl. gebildet. Es erweist sich auch von Vorteil, wenn die Transportvorrichtungen 24a, 24b in Förderrichtung hintereinander mehrere Ladegüter 3, vorzugsweise bis zu vier Ladegüter 3 aufnehmen können.

Es können ein oder mehrere Ladegüter 3 von der Transportvorrichtung 24a, 24b auf einen einzigen Pufferplatz 13a, 13b in der von einer Steuerung definierten Regalebene 11 transportiert werden. Auch können Ladegüter 3 von der Transportvorrichtung 24a, 24b vereinzelt auf mehrere Pufferplätze 13a, 13b in von einer Steuerung definierten unterschiedlichen Regalebenen 11 transportiert werden. Die Transportvorrichtungen 24a, 24b bildet nach dieser Ausführung eine Vereinzelungsvorrichtung.

Andererseits können die Ladegüter 3 von der Transportvorrichtung 24a, 24b von einem einzigen Pufferplatz 13a, 13b abgeholt werden, wobei dann die Transportvorrichtung 24a, 24b vorerst auf das von einer Steuerung definierte Höhenniveau einer Regalebene 11 verstellt und danach ein oder mehrere Ladegüter 3 vom Pufferplatz 13a, 13b in der Regalebene 11 auf die Transportvorrichtung 24a, 24b transportiert werden. Die Transportvorrichtungen der Pufferplätze 13a, 13b bildet nach dieser Ausführung eine Vereinzelungsvorrichtung aus.

Auch können die Ladegüter 3 von der Transportvorrichtung 24a, 24b von Pufferplätzen 13a, 13b in unterschiedlichen Regalebenen 11 abgeholt werden. Dabei wird vorerst die Transportvorrichtung 24a, 24b auf das von einer Steuerung definierte erste Höhenniveau einer Regalebene 11 verstellt und ein oder mehrere Ladegüter 3 vom Pufferplatz 13a, 13b auf die Transportvorrichtung 24a, 24b transportiert und anschließend die Transportvorrichtung 24a, 24b auf das von einer Steuerung definierte zweite Höhenniveau einer Regalebene 11 verstellt und ein oder mehrere Ladegüter 3 vom Pufferplatz 13a, 13b auf die Transportvorrichtung 24a, 24b transportiert.

Die Transportvorrichtungen 24a, 24b sind somit unabhängig (entkoppelt) voneinander zwischen den Regalebenen 11 auf das Höhenniveau einer jeden Regalebene 11 und auf das Höhenniveau einer Fördertechnikebene 30 verstellbar, sodass Ladegüter 3, wie beispielsweise Behälter, Kartonagen, Tablare und dgl., auch zwischen den Transportvorrichtungen 24a, 24b und einer ersten Vorzonen-Fördertechnik gefördert werden können.

Die erste Vorzonen-Fördertechnik schließt an die Ladegut-Hebevorrichtung 5 an und umfasst eine erste Fördervorrichtung 31a und eine zweite Fördervorrichtung 31b, welche mit gegenseitigem Abstand parallel zueinander verlaufen. Die Fördervorrichtungen 31a, 31b sind jeweils durch eine angetriebene Fördervorrichtung, beispielsweise einen Rollenförderer, Gurtförderer und dgl. gebildet. Die erste Fördervorrichtung 31a erstreckt sich in der Verlängerung des ersten Lagerregals 7a und die zweite Fördervorrichtung 31b erstreckt sich in der Verlängerung des zweiten Lagerregals 7b, wobei die Fördervorrichtungen 31a, 31b der ersten Vorzonen-Fördertechnik und die Fördervorrichtungen der Pufferzone zumindest um die Länge der Transportvorrichtungen 24a, 24b voneinander beabstandet angeordnet sind, sodass die Transportvorrichtungen 24a, 24b jeweils in deren auf die Fördertechnikebene 30 abgesenkten Übergabe- bzw. Übernahmestellung zwischen die einander zugewandten Stirnkanten der Fördervorrichtungen bewegbar sind. Da der lichte Abstand zwischen den Fördervorrichtungen 31a, 31b etwa der Breite der Regalgasse 8 entspricht, wird eine sehr Platz sparende Anordnung der ersten Vorzonen-Fördertechnik erreicht.

Hierbei werden über die erste Fördervorrichtung 31a Ladegüter 3 von der ersten Vorzonen-Fördertechnik zur Ladegut-Hebevorrichtung 5 angefördert und über die zweite Fördervorrichtung 31b Ladegüter 3 von der Ladegut-Hebevorrichtung 5 zur ersten Vorzonen-Fördertechnik abgefördert.

Auf der zweiten Regallagerseite 10 ist stirnseitig vor dem Regallager 2 die Förderfahrzeug-Hebevorrichtung 6 (Umsetzvorrichtung) angeordnet, welche nach gezeigter Ausführung eine heb- und senkbare Aufnahmevorrichtung 35 für das Förderfahrzeug 4 aufweist.

Die Aufnahmevorrichtung 35 umfasst eine Führungsbahn, die auf einem über einen Hubantrieb 36 vertikal verstellbaren Hubrahmen 37 aufgebaut ist. Die Führungsbahn ist über den Hubrahmen 37 auf einem Führungsrahmen 38 gelagert, welcher an vertikalen Rahmenteilen 39a, 39b Führungen 40a, 40b aufweist, auf welchen der Hubrahmen 37 mit Führungsrädern 41a, 41b abrollbar aufliegen.

Die Führungsbahn umfasst parallel zur Regalgasse 8 mit gegenseitigem Abstand horizontal erstreckende Fahrschienen 42a, 42b, welche auf dem Hubrahmen 37 befestigt sind und jeweils eine Höhenführungsbahn 49 und Seitenführungsbahn 50 ausbilden. Die Fahrschienen 42a, 42b sind beispielsweise U-Profile, C-Profile und dgl. Das Förderfahrzeug 4 kann über die Antriebsräder 20 entlang der Höhenführungsbahnen 49 rollend bewegt werden. Zur Seitenführung des Förderfahrzeuges 4 dienen die oben beschriebenen Seitenführungsorgane 21, welche zwischen den Seitenführungsbahnen 50 der Fahrschienen 42a, 42b positionierbar sind.

Das Förderfahrzeug 4 (Shuttle) kann durch die Förderfahrzeug-Hebevorrichtung 6 zwischen den Regalebenen 11 mit oder ohne Ladegut 3, wie beispielsweise Behälter, Kartonagen, Tablare und dgl. umgesetzt werden.

Die Aufnahmevorrichtung 35 bzw. Führungsbahn kann zwischen den Regalebenen 11 auf das Höhenniveau einer jeden Regalebene 11 und auf das Höhenniveau einer Fördertechnikebene 43 verstellt werden, sodass Ladegüter 3 auch zwischen der Aufnahmevorrichtung 35 und einer zweiten Vorzonen-Fördertechnik gefördert werden können.

Die zweite Vorzonen-Fördertechnik schließt an die Förderfahrzeug-Hebevorrichtung 6 an und umfasst eine erste Fördervorrichtung 44a und eine zweite Fördervorrichtung 44b, welche mit gegenseitigem Abstand parallel zueinander verlaufen. Die stationären Fördervorrichtungen 44a, 44b sind jeweils durch eine antreibbare Fördervorrichtung, beispielsweise einen Rollenförderer, Gurtförderer und dgl. gebildet. Die erste Fördervorrichtung 44a erstreckt sich in der Verlängerung des ersten Lagerregals 7a und die zweite Fördervorrichtung 44b erstreckt sich in der Verlängerung des zweiten Lagerregals 7b. Der lichte Abstand zwischen den zueinander parallel angeordneten Fördervorrichtungen 44a, 44b entspricht zumindest der Breite der Aufnahmevorrichtung 35, sodass die Aufnahmevorrichtung 35 bzw. Führungsbahn in deren auf die Fördertechnikebene 43 abgesenkten Übergabe- bzw. Übernahmestellung zwischen die einander zugewandten Längskanten 45 der Fördervorrichtungen 44a, 44b bewegbar ist.

Da der lichte Abstand zwischen den Fördervorrichtungen 44a, 44b etwa der Breite der Regalgasse 8 entspricht, wird eine sehr Platz sparende Anordnung der zweiten Vorzonen-Fördertechnik erreicht.

Hierbei werden über die erste Fördervorrichtung 44a Ladegüter 3 von der zweiten Vorzonen-Fördertechnik zur Förderfahrzeug-Hebevorrichtung 6 angefördert und über die zweite Fördervorrichtung 44b Ladegüter 3 von der Förderfahrzeug-Hebevorrichtung 6 zur zweiten Vorzonen-Fördertechnik abgefördert.

Durch die Förderfahrzeug-Hebevorrichtung 6 kann nun zumindest ein Förderfahrzeug 4 zwischen den Regalebene 11 umgesetzt werden.

Soll nun ein Ladegut 3 innerhalb des Regallagers 2, beispielsweise zum Zwecke der Lagerverdichtung von einem Stellplatz 12 in der ersten Regalebene 11 auf einen Stellplatz 12 in der vierten Regalebene 11 umgelagert werden, wird das Förderfahrzeug 4 vorerst auf die Aufnahmevorrichtung 35 übernommen und durch diese auf das von einer Steuerung definierte Höhenniveau der ersten Regalebene 11 verstellt. Danach fährt das Förderfahrzeug 4 entlang der Führungsbahnen von der Aufnahmevorrichtung 35 in das Regallager 2 bis vor den Stellplatz 12 in der ersten Regalebene 11. Dort angekommen, wird durch eine in Fig. 3 schematisch angedeutete Lastaufnahmevorrichtung 46 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsbahnen vom Regallager 2 auf die Aufnahmevorrichtung 35. Wurde das Förderfahrzeug 4 mit dem Ladegut 3 auf der Aufnahmevorrichtung 35 übernommen, wird das Förderfahrzeug 4 auf das von einer Steuerung definierte Höhenniveau der vierten Regalebene 11 verstellt. Danach fährt das Förderfahrzeug 4 entlang der Führungsbahnen von der Aufnahmevorrichtung 35 in das Regallager 2 bis vor den Stellplatz 12 in der vierten Regalebene 11. Dort angekommen, wird durch die Lastaufnahmevorrichtung 46 das Ladegut 3 vom Förderfahrzeug 4 in das Lagerregal 7a, 7b eingelagert.

Soll nun andererseits ein Ladegut 3 gemäß einem Kommissionierauftrag aus dem Regallager 2 ausgelagert werden, wird das Förderfahrzeug 4 vorerst durch die Aufnahmevorrichtung 35 auf das von einer Steuerung definierte Höhenniveau einer Regalebene 11 verstellt. Danach fährt das Förderfahrzeug 4 entlang der Führungsbahnen von der Aufnahmevorrichtung 35 in das Regallager 2 bis vor einen Stellplatz 12 in einer der Regalebenen 11. Dort angekommen, wird durch die Lastaufnahmevorrichtung 46 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsbahnen vom Regallager 2 auf die Aufnahmevorrichtung 35. Wurde das Förderfahrzeug 4 mit dem Ladegut 3 auf der Aufnahmevorrichtung 35 übernommen, wird das Förderfahrzeug 4 auf die von einer Steuerung definierte Fördertechnikebene 43 in die Übergabe- bzw. Übernahmestellung zwischen die Fördervorrichtungen 44a, 44b bewegt und das Ladegut 3 auf die Fördervorrichtung 44b übergeben. Zur Übergabe des Ladegutes 3 kann wiederum die Lastaufnahmevorrichtung 46 oder eine (nicht dargestellte) vom Förderfahrzeug 4 getrennte Entladevorrichtung, beispielsweise ein Schieber oder Riemenumsetzer, verwendet werden.

Es kann auch vorgesehen werden, dass nicht nur in der ersten Vorzone Ladegüter 3 auf der Fördervorrichtung 31a bereitgestellt werden, sondern auch in der zweiten Vorzone auf der Fördervorrichtung 44a.

Soll nun ein auf der Fördervorrichtung 44a bereitgestelltes Ladegut 3 in das Regallager 2 eingelagert werden, wird das Förderfahrzeug 4 vorerst durch die Aufnahmevorrichtung 35 auf die von einer Steuerung definierte Fördertechnikebene 43 in die Übergabe- bzw. Übernahmestellung zwischen die Fördervorrichtungen 44a, 44b bewegt. Danach wird das Ladegut 3 von der Fördervorrichtung 44b auf das Förderfahrzeug 4 übernommen. Zur Übernahme des Ladegutes 3 kann wiederum die Lastaufnahmevorrichtung 46 oder eine (nicht dargestellte) vom Förderfahrzeug 4 getrennte Beladevorrichtung, beispielsweise ein Schieber oder Riemenumsetzer, verwendet werden.

Wurde das Ladegut 3 auf das Förderfahrzeug 4 übernommen, wird das Förderfahrzeug 4 durch die Aufnahmevorrichtung 35 auf das von einer Steuerung definierte Höhenniveau einer Regalebene 11 verstellt. Danach fährt das Förderfahrzeug 4 entlang der Führungsbahnen von der Aufnahmevorrichtung 35 in das Regallager 2 bis vor einen freien Stellplatz 12 in einer der Regalebenen 11. Dort angekommen, wird durch die Lastaufnahmevorrichtung 46 das Ladegut 3 in das Lagerregal 7a, 7b auf einen vorderen oder hinteren Stellplatz 12 eingelagert.

Die oben beschriebene, vom Förderfahrzeug 4 getrennte (nicht gezeigte) Be- und Entladevorrichtung funktioniert derart, dass ein erster Riemenumsetzer in der ersten Fördervorrichtung 44a und ein zweiter Riemenumsetzer in der zweiten Fördervorrichtung 44b jeweils endseitig integriert oder ein erster Schieber oberhalb der ersten Fördervorrichtung 44a und ein erster Schieber oberhalb der zweiten Fördervorrichtung 44b jeweils endseitig angeordnet sind und eine Querversetzung/Querverschiebung zumindest eines Ladegutes 3 ermöglichen.

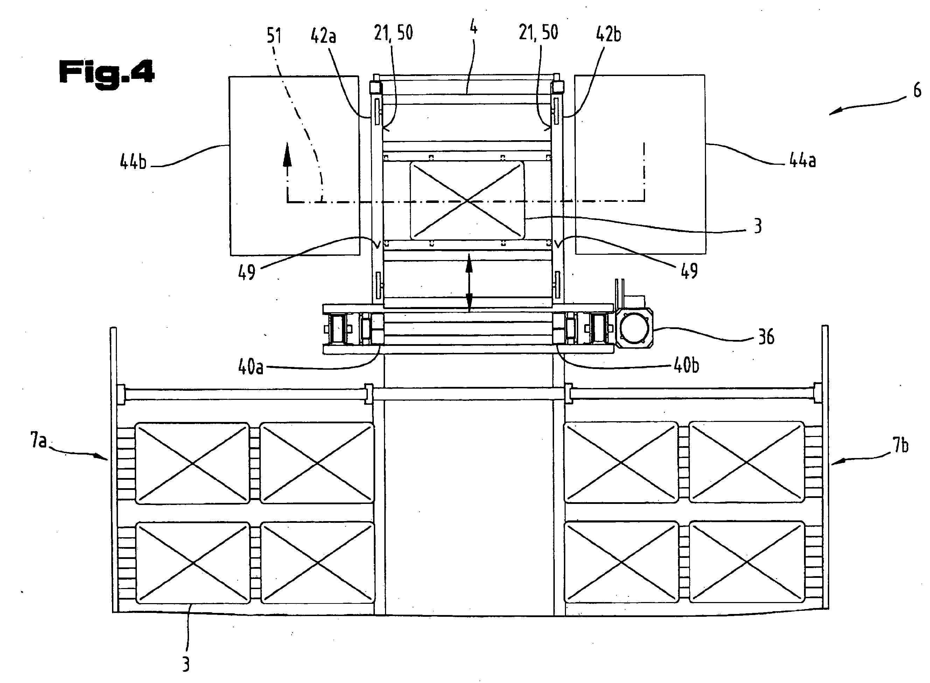

Anderenfalls ist es auch möglich, wie in Fig. 4 gezeigt, dass ein Ladegut 3 erst gar nicht in das Lagerregal 7a, 7b eingelagert wird, wenn dieses gemäß einem Kommissionierauftrag unmittelbar benötigt wird. Dies kann insbesondere bei "Eilaufträgen" der Fall sein. Die Steuerung realisiert üblicherweise auch die Funktion eines Materialflussrechners. Der Steuerung ist demnach bekannt, welche Ladegüter 3 sich wo im Regallagersystem 1 und auf der Fördertechnik 44a befinden.

Ist gemäß einem Kommissionierauftrag ein Ladegut 3 erforderlich, welches sich auf der Fördertechnik 44a befindet, wird die Förderfahrzeug-Fördertechnik 6 dazu verwendet, dass ein Förderfahrzeug 4 durch die Aufnahmevorrichtung 35 auf die von einer Steuerung definierte Fördertechnikebene 43 in die Übergabe- bzw. Übernahmestellung zwischen die Fördervorrichtungen 44a, 44b bewegt wird, sodass ein Ladegut 3 ohne Ein- und Auslagervorgang (Bereitstellungsvorgang) unmittelbar von der Fördervorrichtung 44a über das Förderfahrzeug 4 auf die Fördervorrichtung 44b übergeben wird. Das Förderfahrzeug 4 bildet demnach einen Förderweg 51 zwischen den Fördertechniken 44a, 44b.

Befindet sich also ein zu einem Kommissionierauftrag benötigtes Ladegut 3 noch auf der Fördervorrichtung 44a und liegt beispielsweise ein "Eilauftrag" vor, ist es im Gegensatz zum Stand der Technik nicht erforderlich, dass ein Ladegut 3:
i) von der ersten Vorzonen-Fördertechnik bereitgestellt,
ii) unmittelbar auf ein Förderfahrzeug 4 übernommen oder aus einem Regallager 2 ausgelagert und auf ein Förderfahrzeug 4 übernommen,
iii) durch das Regallager 2 hindurchgefördert und
iv) über die Förderfahrzeug-Fördertechnik 6 an der zweiten Vorzonen-Fördertechnik angeliefert wird.

Werden im Regallagersystem 1 mehrere mobile Förderfahrzeuge 4 vorgesehen, wobei die Anzahl der Förderfahrzeuge 4 niedriger ist als die Anzahl der Regallagerebenen 11 und somit eine Förderfahrzeug-Hebevorrichtung 6 erforderlich ist, um die Förderfahrzeuge 4 zwischen den Regallagerebenen 11 umsetzen zu können, und erfolgt die Bereitstellung von Ladegütern 3 aus der ersten Vorzonen-Fördertechnik und zweiten Vorzonen-Fördertechnik, kann das Regallager 2 gegenüber solchen aus dem Stand der Technik bekannten Regallagersystemen in wesentlich kürzerer Zeit "befüllt" werden. Dadurch kann die Effizienz des Regallagersystems 1 erheblich gesteigert werden.

Ein weiterer Vorteil liegt auch darin, dass bei Betriebsstörungen einer der Fördervorrichtungen 31a, 44a durch die andere der Fördervorrichtungen 31a, 44a dennoch die Beschickung des Regallagers 2 erfolgen kann. Vorzugsweise ist eine (nicht dargestellte) zentrale Fördertechnik, wie Rollenförderer, Gurtförderer und dgl. vorgesehen, an welcher beide Fördervorrichtungen 31a, 44a angeschlossen sind. Die zentrale Fördertechnik umfasst einen ersten Ausschleusbereich, in welchem die Fördergüter 3 durch eine (nicht dargestellte) erste Ausschleusvorrichtung von der Fördertechnik auf die Fördervorrichtung 31a gefördert werden können, und einen zweiten Ausschleusbereich, in welchem die Fördergüter 3 durch eine (nicht dargestellte) zweite Ausschleusvorrichtung von der Fördertechnik auf die Fördervorrichtung 44a gefördert werden können. Auf diese Weise kann nun bei einer Betriebsstörung an der Fördervorrichtung 31a von der Steuerung ein Steuersignal an die zweite Ausschleusvorrichtung übermittelt werden, worauf über die Dauer der Betriebsstörung jene Ladegüter 3, welche an die Fördervorrichtung 31a hätten gefördert werden sollen, auf die Fördervorrichtung 44a abgefördert werden.

In den gemeinsam beschriebenen Fig. 5 bis 8 ist eine Ausführung eines erfindungsgemäßen Regallagersystems 52 gezeigt, welches das oben beschriebene Regallager 2 für Ladegüter 3, zumindest ein Förderfahrzeug 4 und gegebenenfalls auf der ersten Regallagerseite 9 zusätzlich jeweils den Regalebenen 11 der Lagerregale 7a, 7b vorgelagert in Reihen angeordnete Pufferplätze 13a, 13b für Ladegüter 3 umfasst. Ferner umfasst das Regallagersystem 52 eine modifizierte Ausführung einer Ladegut-Hebevorrichtung 53.

Im Unterschied zu obiger Ausführung bildet die Ladegut-Hebevorrichtung 53 auch eine Förderfahrzeug-Hebevorrichtung 54 aus, wobei beide Hebevorrichtungen 53, 54 stirnseitig vor dem Regallager 2 auf einer der Regalseiten 9, 10 angeordnet sind.

Die Ladegut-Hebevorrichtung 53 umfasst unabhängig voneinander heb- und senkbare Transportvorrichtungen 55a, 55b (Aufnahmevorrichtungen) mit einer sich parallel zur Regalgasse 8 erstreckenden Förderrichtung. Die erste Transportvorrichtung 55a ist auf einem über einen ersten Hubantrieb 56a vertikal verstellbaren Hubrahmen 57a und die zweite Transportvorrichtung 55b ist auf einem über einen zweiten Hubantrieb 56b vertikal verstellbaren Hubrahmen 57b aufgebaut. Die Hubantriebe 56a, 56b weisen jeweils elektrische Antriebsmotoren auf.

Die Transportvorrichtungen 55a, 55b sind über die Hubrahmen 57a, 57b auf einem einzigen Mast 58 gelagert. Der Mast 58 ist mit Führungen 59a, 59b versehen, auf welchen die Hubrahmen 57a, 57b mit Führungsrädern 60a, 60b abrollbar aufliegen.

Nach einer anderen Ausführung, ist hingegen die erste Transportvorrichtung 55a über den Hubrahmen 57a auf einem ersten Mast 58a und die zweite Transportvorrichtung 55b über den Hubrahmen 57b auf einem zweiten Mast 58b gelagert, wie die Anordnung in Fig. 1 zeigt.

Die Transportvorrichtungen 55a, 55b sind somit unabhängig (entkoppelt) voneinander zwischen den Regalebenen 11 und auf das Höhenniveau einer jeden Regalebene 11 verstellbar, sodass Ladegüter 3, wie beispielsweise Behälter, Kartonagen, Tablare und dgl. zwischen den Transportvorrichtungen 55a, 55b und Pufferplätzen 13a, 13b gefördert werden können. Vorzugsweise sind die Transportvorrichtungen 55a, 55b jeweils durch eine antreibbare Förderbahn, wie eine Staurollenbahn, Staugurtförderer und dgl. gebildet. Es erweist sich auch von Vorteil, wenn die Transportvorrichtungen 55a, 55b in Förderrichtung hintereinander mehrere Ladegüter 3, vorzugsweise bis zu vier Ladegüter 3 aufnehmen können.

Es können ein oder mehrere Ladegüter 3 von der Transportvorrichtung 55a, 55b auf einen einzigen oder mehreren Pufferplätzen 13a, 13b in der von einer Steuerung definierten Regalebene 11 transportiert werden, wie oben beschrieben. Andererseits können ein oder mehrere Ladegüter 3 von der Transportvorrichtung 55a, 55b von einem einzigen oder mehreren Pufferplätzen 13a, 13b abgeholt werden, wie ebenfalls oben beschrieben.

Die Transportvorrichtungen 55a, 55b sind auch auf das Höhenniveau der Fördertechnikebene 30 verstellbar, sodass Ladegüter 3, wie beispielsweise Behälter, Kartonagen, Tablare und dgl., auch zwischen den Transportvorrichtungen 55a, 55b und der beschriebenen ersten Vorzonen-Fördertechnik gefördert werden können. Hierbei werden über die erste Fördervorrichtung 31a Ladegüter 3 von der ersten Vorzonen-Fördertechnik zur Ladegut-Hebevorrichtung 53 angefördert und über die zweite Fördervorrichtung 31b Ladegüter 3 von der Ladegut-Hebevorrichtung 53 zur ersten Vorzonen-Fördertechnik ab gefördert.

Die Förderfahrzeug-Hebevorrichtung 54 (Umsetzvorrichtung) weist eine heb- und senkbare Aufnahmevorrichtung 61 für das Förderfahrzeug 4 auf. Die Aufnahmevorrichtung 61 ist durch jeweils an den Transportvorrichtungen 55a, 55b befestigte und einander zugewandte Fahrschienen 62a, 62b gebildet, welche derart über die Transportvorrichtungen 55a, 55b in eine Aufnahmestellung verstellbar sind, dass das Förderfahrzeug 4 in eine Aufnahmeposition auf den Fahrschienen 62a, 62b zwischen die Transportvorrichtungen 55a, 55b aufnehmbar ist.

Die mit gegenseitigem Abstand parallel erstreckenden Fahrschienen 62a, 62b sind an den einander gegenüberliegenden Rahmenprofilen 63a, 63b der Transportvorrichtungen 55a, 55b befestigt und bilden jeweils eine Höhenführungsbahn 64a, 64b und Seitenführungsbahn 65a, 65b aus. Die Fahrschienen 62a, 62b sind beispielsweise U-Profile, C-Profile und dgl. Das Förderfahrzeug 4 kann über die Antriebsräder 20 entlang der Höhenführungsbahnen 64a, 64b rollend bewegt werden. Zur Seitenführung des Förderfahrzeuges 4 dienen die oben beschriebenen Seitenführungsorgane 21, welche zwischen den Seitenführungsbahnen 64a, 64b der Fahrschienen 62a, 62b positionierbar sind.

Soll das Förderfahrzeug 4 (Shuttle) auf das Höhenniveau einer der Regalebenen 11 oder auf das Höhenniveau einer Fördertechnikebene 30 transportiert werden, werden die Transportvorrichtungen 55a, 55b vorerst relativ zueinander bewegt und dabei die Fahrschienen 62a, 62b in die Aufnahmestellung verbracht, in welcher die Fahrschienen 62a, 62b in einer parallel zur Transportebene 66 verlaufenden Aufnahmeebene einander gegenüberliegen und das Förderfahrzeug 4 von einer der Führungsbahnen in dem Regallager 2 oder der Pufferzone in die Aufnahmeposition auf den Fahrschienen 62a, 62b verfahren kann. Durch elektrische Synchronisierung der Hubantriebe 56a, 56b werden die Transportvorrichtungen 55a, 55b während der (synchronen und gleichsinnigen) vertikalen Verstellbewegung der Transportvorrichtungen 55a, 55b in der Aufnahmestellung gehalten und das Förderfahrzeug 4 (Shuttle) mit oder ohne Ladegut 3, wie beispielsweise Behälter, Kartonagen, Tablare und dgl. zwischen den Regalebenen 11 und/oder einer der Regalebenen 11 und der Fördertechnikebene 30 umgesetzt.

In einer vorteilhaften Ausführung der Erfindung kann das Förderfahrzeug 4 in seiner Aufnahmeposition zwischen den Fahrschienen 62a, 62b mittels einer Feststellvorrichtung 67 (Fig. 3) arretiert werden. Die Feststellvorrichtung ist vorzugsweise durch eine elektromagnetische oder elektromechanische Haltebremse gebildet, welche das Förderfahrzeug 4 umfasst. Beispielsweise kann der Antriebsmotor des Fahrantriebes vom Förderfahrzeug 4 die Haltebremse ausbilden. Dadurch kann das Förderfahrzeug in seiner Aufnahmeposition auf den Fahrschienen gesichert gehalten werden, sodass auch bei sehr dynamischen Verstellbewegungen der Transportvorrichtungen keine Gefahr besteht, dass sich das Förderfahrzeug aus seiner gesicherten Aufnahmeposition wegbewegt.

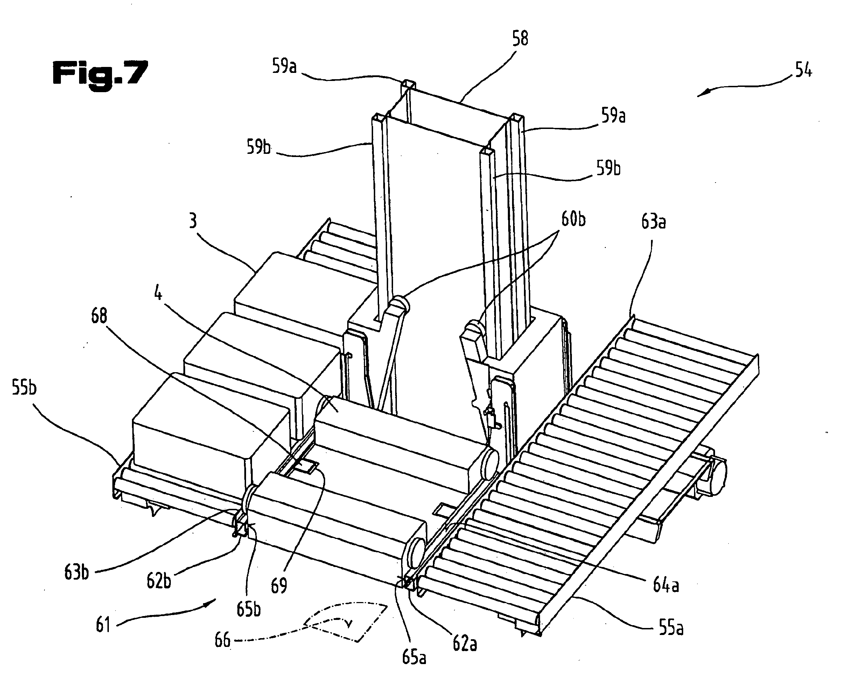

Auch ist es möglich, wie in Fig. 7 schematisch eingetragen, dass die Aufnahmevorrichtung 61 eine Verriegelungsvorrichtung aufweist, mittels welcher das Förderfahrzeug 4 in seiner Aufnahmeposition zwischen den Fahrschienen 62a, 62b arretiert werden kann. Die Verriegelungsvorrichtung umfasst beispielsweise in gegenseitigen Eingriff bringbare Verriegelungselemente 68, 69, wie Verriegelungsbolzen und Verriegelungsausnehmungen. Das Verriegelungselement 68 (Verriegelungsbolzen) ist auf den Transportvorrichtung 55a, 55b gelagert und über einen (nicht dargestellten) Antrieb relativ zum Förderfahrzeug 4 verstellbar. Das Verriegelungselement 69 (Verriegelungsausnehmung) ist am Förderfahrzeug 4 angeordnet.

Wie aus Fig. 5 ersichtlich, sind mit dieser Ausführung der Ladegut-Hebevorrichtung 53 bzw. Förderfahrzeug-Hebevorrichtung 54 unterschiedliche Einlagerungsvorgänge (Beschickungsvorgänge) für die Ladegüter 3 in das Regallager 2 möglich.

Die Ladegüter 3 werden von der ersten Fördervorrichtung 31 a zur Ladegut-Hebevorrichtung 53 angefördert und auf die erste Transportvorrichtung 55a übernommen.

Anschließend werden die Ladegüter 3 von der ersten Transportvorrichtung 55a auf die Pufferzone und/oder das Förderfahrzeug 4 gefördert.

Dabei können ein oder mehrere Ladegüter 3 von der Transportvorrichtung 55a in der Pufferzone auf einen einzigen Pufferplatz 13a, 13b in der von einer Steuerung definierten Regalebene 11 transportiert werden. Auch können Ladegüter 3 von der Transportvorrichtung 55a vereinzelt auf mehrere Pufferplätze 13a, 13b in von einer Steuerung definierten unterschiedlichen Regalebenen 11 transportiert werden. Die Transportvorrichtungen 55a bildet nach dieser Ausführung eine Vereinzelungsvorrichtung. Danach wird das auf einem Pufferplatz 13a, 13b in der betreffenden Regalebene 11 zwischengelagerte (zumindest eine) Ladegut 3 von dem auf diese Regalebene 11 geförderten Förderfahrzeug 4 übernommen und in dieser Regalebene 11 mittels der Lastaufnahmevorrichtung 46 auf einem freien Stellplatz 12 abgestellt. Das Einlagern der Ladegüter 3 in das Lagerregal 7a, 7b erfolgt nach dem chaotischen Lagerungsprinzip.

Soll andererseits ein Ladegut 3 ohne Zwischenlagerung in der Pufferzone unmittelbar in das Regallager 2 eingelagert werden, werden ein oder mehrere Ladegüter 3 über die Lastaufnahmevorrichtung 46 (Fig. 3) von der Transportvorrichtung 55a auf das Förderfahrzeug 4 übernommen. Danach wird das Förderfahrzeug 4 mit dem einen oder mehreren Ladegütern 3 über die Aufnahmevorrichtung 61 durch synchrone Vertikalbewegung der Transportvorrichtungen 55a, 55b in die vom Rechner definierte Regalebene 11 verstellt, in welcher das Förderfahrzeug 4 entlang der Fahrschienen 14a, 14b zu einem freien Stellplatz 12 verfährt und dort das oder die Ladegüter 3 mittels der Lastaufnahmevorrichtung 46 abstellt.

Werden mehrere Förderfahrzeuge 4 im Regallagersystem 52 eingesetzt, ist es auch möglich, das unmittelbar nach der Übergabe eines ersten Förderfahrzeuges 4 von der Aufnahmevorrichtung 61 an die Führungsbahn in der betreffenden Regalebene 11 von der Aufnahmevorrichtung 61 ein zweites Förderfahrzeuges 4 aus einer der anderen Regalebenen 11 aufgenommen wird. Danach werden noch während der Vertikalbewegung der Transportvorrichtungen 55a, 55b in die vom Rechner definierte Regalebene 11 ein oder mehrere Ladegüter 3 über die Lastaufnahmevorrichtung 46 (Fig. 3) von der Transportvorrichtung 55a auf das zweite Förderfahrzeug 4 übernommen. Dadurch werden eine Optimierung des Beschickungsvorganges und damit eine Steigerung der Effizienz des Regallagersystems 52 erreicht.

Wie aus Fig. 5 auch ersichtlich, sind mit dieser Ausführung der Ladegut-Hebevorrichtung 53 bzw. Förderfahrzeug-Hebevorrichtung 54 unterschiedliche Auslagerungsvorgänge für die Ladegüter 3 aus dem Regallager 2 möglich.

Die Ladegüter 3 können vom Regallager 7a, 7b vom Förderfahrzeug 4 in die Pufferzone und/oder zur Ladegut-Hebevorrichtung 53 bzw. Förderfahrzeug-Hebevorrichtung 54 gefördert werden.

Dabei werden vorerst ein oder mehrere Ladegüter 3 mittels der Lastaufnahmevorrichtung 46 von einem Lagerregal 7a, 7b auf das Förderfahrzeug 4 übernommen und dieses mit dem oder den Ladegütern 3 entlang der Fahrschienen 14a, 14b in einer der Regalebenen 11 in die Pufferzone verfahren. Dort angekommen, können in dieser Regalebene 11 mittels der Lastaufnahmevorrichtung 46 ein oder mehrere Ladegüter 3 vom Förderfahrzeug 4 auf einem einzigen freien Pufferplatz 13a, 13b abgestellt werden. Auch können mittels der Lastaufnahmevorrichtung 46 Ladegüter 3 vom Förderfahrzeug 4 vereinzelt auf mehrere freie Pufferplätze 13a, 13b in von einer Steuerung definierten unterschiedlichen Regalebenen 11 abgestellt werden. Die Lastaufnahmevorrichtung 46 bildet nach dieser Ausführung eine Vereinzelungsvorrichtung. Danach werden mittels der Lastaufnahmevorrichtung 46 ein oder mehrere zwischengelagerte Ladegüter 3 von einem Pufferplatz 13a, 13b in der betreffenden Regalebene 11 auf das, auf diese Regalebene 11 umgesetzte Förderfahrzeug 4 übernommen. Währenddessen wird die Aufnahmevorrichtung 61 auf Höhe der Führungsbahn in der betreffenden Regalebene 11 bewegt, wo das Förderfahrzeug 4 mit dem (zumindest einen) Ladegut 3 in eine Aufnahmeposition auf den Fahrschienen 62a, 62b zwischen die Transportvorrichtungen 55a, 55b bewegt wird. Anschließend werden die Transportvorrichtungen 55a, 55b auf das Höhenniveau der Fördertechnikebene 30 abgesenkt, wo das oder die Ladegüter 3 von der Transportvorrichtung 55b auf die zweite Fördervorrichtung 31b abgefördert werden.

Soll andererseits ein oder mehrere Ladegüter 3 ohne Zwischenlagerung in der Pufferzone unmittelbar zur Ladegut-Hebevorrichtung 53 bzw. Förderfahrzeug-Hebevorrichtung 54 gefördert werden, werden vorerst ein oder mehrere Ladegüter 3 mittels der Lastaufnahmevorrichtung 46 von einem Lagerregal 7a, 7b auf das Förderfahrzeug 4 übernommen und dieses mit dem oder den Ladegütern 3 entlang der Fahrschienen 14a, 14b in einer der Regalebenen 11 in Richtung zur Ladegut-Hebevorrichtung 53 bzw. Förderfahrzeug-Hebevorrichtung 54 verfahren. Währenddessen wird die Aufnahmevorrichtung 61 auf Höhe der Führungsbahn in der betreffenden Regalebene 11 bewegt, wo das Förderfahrzeug 4 mit dem oder den Ladegütern 3 in eine Aufnahmeposition auf den Fahrschienen 62a, 62b zwischen die Transportvorrichtungen 55a, 55b bewegt wird. Danach werden die Transportvorrichtungen 55a, 55b synchron auf das Höhenniveau der Fördertechnikebene 30 und gleichermaßen die Aufnahmevorrichtung 61 verstellt. Währenddessen werden ein oder mehrere Ladegüter 3 mittels der Lastaufnahmevorrichtung 46 vom Förderfahrzeug 4 auf die Transportvorrichtung 55b abgeführt. Befinden sich die Transportvorrichtungen 55a, 55b auf dem Höhenniveau der Fördertechnikebene 30, können das oder die Ladegüter 3 von der Transportvorrichtung 55b auf die zweite Fördervorrichtung 31b von der Ladegut-Hebevorrichtung 53 abgefördert werden.

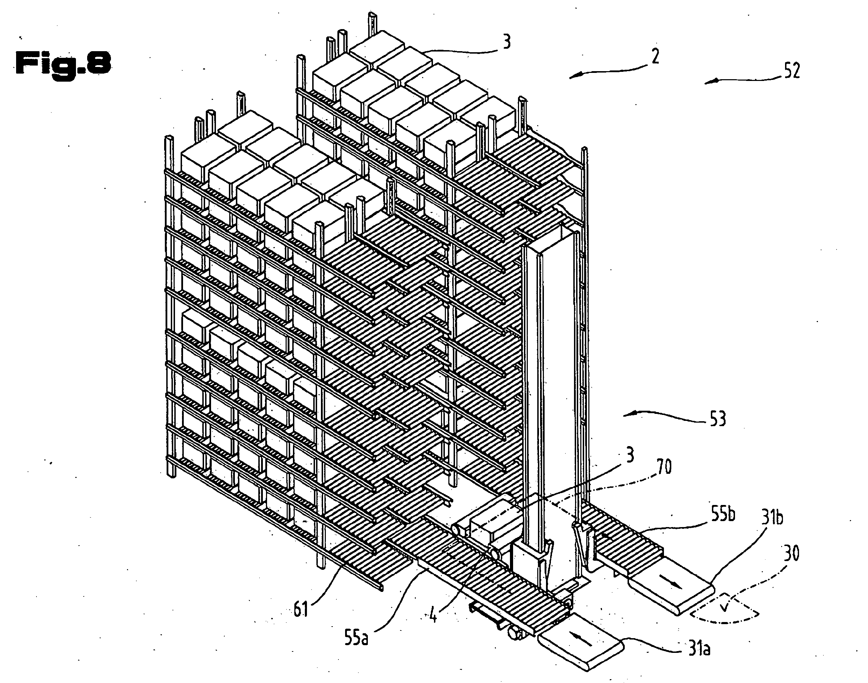

Wie aus Fig. 8 ersichtlich, ist mit dieser Ausführung der Ladegut-Hebevorrichtung 53 bzw. Förderfahrzeug-Hebevorrichtung 54 auch eine Umlagerung von Ladegütern 3 zwischen der ersten Fördervorrichtung 31a, 31b bzw. Transportvorrichtungen 55a, 55b möglich.

Ist gemäß einem Kommissionierauftrag ein Ladegut 3 erforderlich, welches sich auf der Fördertechnik 31a befindet, wird die Ladegut-Hebevorrichtung 53 bzw. Förderfahrzeug-Hebevorrichtung 54 dazu verwendet, dass ein Förderfahrzeug 4 durch die Aufnahmevorrichtung 61 in der Aufnahmeposition zwischen den Transportvorrichtungen 55a, 55b positioniert und die Transportvorrichtungen 55a, 55b auf die von einer Steuerung definierte Fördertechnikebene 30 in die Übergabe- bzw. Übernahmestellung relativ zu den Fördervorrichtungen 31a, 31b bewegt werden, sodass ein Ladegut 3 ohne Ein- und Auslagervorgang (Bereitstellungsvorgang) unmittelbar von der Fördervorrichtung 31a auf die Transportvorrichtung 55a und von dieser über das Förderfahrzeug 4 zur Transportvorrichtung 55b übergeben wird. Das Förderfahrzeug 4 bildet demnach einen Förderweg 70 zwischen den Transportvorrichtungen 55a, 55b.

Dadurch ist es auch möglich, dass ein Ladegut 3 erst gar nicht in das Lagerregal 7a, 7b eingelagert wird, wenn diese gemäß einem Kommissionierauftrag unmittelbar benötigt wird. Dies kann insbesondere bei "Eilaufträgen" der Fall sein. Dadurch werden Transportstrecken für Ladegüter 3 bei "Eilaufträgen" optimiert. Ebenso kann die Anzahl der Ein- und Auslagervorgänge (Bereitstellungsvorgänge) durch das Förderfahrzeug 4 reduziert werden, was sich positiv auf den Wartungsaufwand und die Standzeit des Regallagersystems 1 auswirkt. Ansonsten gelten dieselben Vorteile, wie oben beschrieben.

Anschließend sei noch drauf hingewiesen, dass aus Gründen der besseren Übersicht in den Regallagersystemen 1; 52 jeweils nur ein Förderfahrzeug 4 dargestellt ist. Üblicherweise werden aber in den Regallagersystemen 1; 52 mehrere Förderfahrzeuge 4 (Shuttle), beispielsweise für je drei Regalebenen 11 zumindest ein Förderfahrzeug 4 eingesetzt.

**Bezugszeichenaufstellung**

| | | | |
|---|---|---|---|
| 1 | Regallagersystem | 42 | Fahrschiene |
| 2 | Regallager | 43 | Fördertechnikebene |
| 3 | Ladegut | 44 | Fördervorrichtung |
| 4 | Förderfahrzeug | 45 | Längskante |
| 5 | Ladegut-Hebevorrichtung | | |
| | | 46 | Lastaufnahmevorrichtung |
| 6 | Förderfahrzeug-Hebevorrichtung | 47 | Teleskoparm |
| 7 | Lagerregal | 48 | Mitnehmer |
| 8 | Regalgasse | 49 | Höhenführungsbahn |
| 9 | Regallagerseite | 50 | Seitenführungsbahn |
| 10 | Regallagerseite | | |
| | | 51 | Förderweg |
| 11 | Regalebene | 52 | Regallagersystem |
| 12 | Stellplatz | 53 | Ladegut-Hebevorrichtung |
| 13 | Pufferplatz | 54 | Förderfahrzeug-Hebevorrichtung |
| 14 | Fahrschiene | 55 | Transportvorrichtung |
| 15 | Höhenführungsbahn | | |
| | | 56 | Hubantrieb |
| 16 | Seitenführungsbahn | 57 | Hubrahmen |
| 17 | Fahrschiene | 58 | Mast |
| 18 | Höhenführungsbahn | 59 | Führung |
| 19 | Seitenführungsbahn | 60 | Führungsrad |
| 20 | Antriebsrad | | |
| | | 61 | Aufnahmevorrichtung |
| 21 | Seitenführungsorgan | 62 | Fahrschiene |
| 22 | Gehäuserahmen | 63 | Rahmenprofil |
| 23 | Aufnahmevorrichtung | 64 | Höhenführungsbahn |
| 24 | Transportvorrichtung | 65 | Seitenführungsbahn |
| 25 | Hubantrieb | | |
| | | 66 | Transportebene |
| 26 | Hubrahmen | 67 | Feststellvorrichtung |
| 27 | Mast | 68 | Verriegelungselement |
| 28 | Führung | 69 | Verriegelungselement |
| 29 | Führungsrad | 70 | Förderweg |
| 30 | Fördertechnikebene | | |
| | | | |
| 31 | Fördervorrichtung | | |
| 32 | | | |
| 33 | | | |
| 34 | | | |
| 35 | Aufnahmevorrichtung | | |
| | | | |
| 36 | Hubantrieb | | |
| 37 | Hubrahmen | | |
| 38 | Führungsrahmen | | |
| 39 | Rahmenteil | | |
| 40 | Führung | | |
| 41 | Führungsrad | | |

## Patentansprüche

1. Regallagersystem (52) mit einem Regallager (2) mit benachbart zueinander angeordneten Lagerregalen (7a, 7b), zwischen denen sich zumindest eine Regalgasse (8) von einer ersten Regallagerseite (9) zu einer zweiten Regallagerseite (10) erstreckt und welche in übereinander liegenden Regalebenen (11) Stellplätze (12) für Ladegüter (3) aufweisen, und in den Regalebenen (11) entlang der Regalgasse (8) verlaufenden Führungsbahnen (14a, 14b) und zumindest einem entlang der Fühnmgsbahnen (14a, 14b) verfahrbaren, autonomen Förderfahrzeug (4) zum Transport der Ladegüter (3) zu den Stellplätzen (12) und einer auf einer der Regallagerseiten (9,10) angeordneten Ladegut-Hebevorrichtung (53), welche Ladegut-Hebevorrichtung (53) unabhängig voneinander heb- und senkbare Transportvorrichtungen (55a,55b) zum Transport von Stückgütern (3) zwischen den Regalebenen (11) und eine hebund senkbare Aufnahmevorrichtung (61) zum Transport des Förderfahrzeuges (4) zwischen den Regalebenen (11) aufweist, **dadurch gekennzeichnet, dass** die Aufnahmevorrichtung (61) jeweils an den Transportvorrichtungen (55a, 55b) befestigte und einander zugewandte Fahrschienen (62a, 62b) umfasst, wobei die Fahrschienen (62a, 62b) mit den Transportvorrichtungen (55a, 55b) in eine Ausnahmestellung verstellbar sind, in welcher das Förderfahrzeug (4) in eine Aufnahmeposition auf den Fahrschiene (62a, 62b) verfahrbar und in dieser zwischen den übereinander liegenden Regalebenen (11) bewegbar ist.

2. Regallagersystem (52) nach Anspruch 1, **dadurch gekennzeichnet, dass** die Transportvorrichtungen (55a, 55b) jeweils in Förderrichtung hintereinander Stauzonen aufweisen.

3. Regallagersystem (52) nach Anspruch 1, **dadurch gekennzeichnet, dass** eine erste Transportvorrichtung (55a) auf einem über einen ersten Hubantrieb (56a) vertikal verstellbaren Hubrahmen (57a) und eine zweite Transportvorrichtung (55b) auf einem über einen zweiten Hubantrieb (56b) vertikal verstellbaren Hubrahmen (57b) aufgebaut sind, wobei die Hubrahmen (57a, 57b) an einem einzigen Mast (58) geführt sind.

4. Regallagersystem (52) nach Anspruch 1, **dadurch gekennzeichnet, dass** eine erste Transportvorrichtung (55a) auf einem über einen ersten Hubantrieb (56a) vertikal verstellbaren Hubrahmen (57a) und eine zweite Transportvorrichtung (55b) auf einem über einen zweiten Hubantrieb (56b) vertikal verstellbaren Hubrahmen (57b) aufgebaut sind, wobei die Hubrahmen (57a, 57b) jeweils an einem Mast (27a, 27b) geführt sind.

5. Regallagersystem (52) nach Anspruch 1, **dadurch gekennzeichnet, dass** die Fahrschienen (62a, 62b) zum Transport des Förderfahrzeuges (4) zwischen den Regalebenen (11) durch elektrische Synchronschaltung der Antriebsmotoren der Hubantriebe (56a, 56b) in der Aufnahmestellung gehalten und gekoppelt relativ zu den Regalebenen (11) verstellbar sind.

6. Regallagersystem (52) nach Anspruch 1, **dadurch gekennzeichnet, dass** die Transportvorrichtungen (55a, 55b) zum Transport der Ladegüter (3) zwischen den Regalebenen (11) durch Steuerung der Antriebsmotoren der Hubantriebe (56a, 56b) unabhängig vaneinartder und jeweils relativ zu den Regalebenen (11) verstellbar sind.

7. Regallagersystem (52) nach Anspruch 1, **dadurch gekennzeichnet, dass** das Förderfahrzeug (4) in seiner Aufnahmeposition zwischen den Fahrschienen (62a, 62b) mittels einer Verriegelungsvorrichtung (68,69) arretierbar ist.

8. Verfahren zum Betreiben eines Regallagersystems (52) mit einem Regallager (2) mit benachbart zueinander angeordneten Lagerregalen (7a, 7b), zwischen denen sich zumindest eine Regalgasse (8) von einer ersten Regallagerseite (9) zu einer zweiten Regallagerseite, (10) erstreckt und welche in übereinander liegenden Regalebenen (11) Stellplätze (12) für Ladegüter (3) aufweisen, und in den Regalebenen (11) entlang der Regalgasse (8) verlaufenden Führungsbahnen (14a, 14b) und zumindest einem entlang der Führungsbahnen (14a,14b) verfahrbaren, autonomen Förderfahrzeug (4), wobei die Ladegüter (3) über heb- und senkbare Transpartvorrichtungen (55a, 55b) zum Regallager (2) angefördert und vom Regallager (2) abgefördert werden und wobei das Förderfahrzeug (4) über eine heb- und senkbare Aufnahmevorrichtung (61) zwischen den Regalebenen (11) transportiert und danach in einer der Regalebenen (11) entlang der Führungsbahnen (14a, 14b) verfahren kann, um zumindest ein Ladegut (3) von einem Stellplatz (12) abzuholen oder auf einen Stellplatz (12) abzulegen, **dadurch gekennzeichnet, dass** die Aunuahmevorrichtung (61) jeweils an den Transportvorrichtungen (55a, 55b) befestigte und einander zugewandte Fahrschienen (62a, 62b) umfasst, welche mit den Transportvorrichtungen (55a, 55b) in eine Aufnahmestellung verstellt werden, in welcher das Förderfahrzeug (4) in eine Aufnahmeposition auf den Fahrschienen (62a, 62b) bewegt und in dieser zwischen den übereinander liegenden Regalebenen (11) transportiert werden kann.

## Claims

1. A rack storage system (52) with a rack store (2) with store racks (7a, 7b) arranged adjacent to one another, between which at least one rack aisle (8) extends from a first rack store side (9) to a second rack store side (10) and which have storing positions (12) for goods (3) in rack levels (11) which lie one above another, and guide tracks (14a, 14b) running along the rack aisle (8) in the rack levels (11), and at least one autonomous conveyor vehicle (4) movable along the guide tracks (14a, 14b) for transporting the goods (3) to the storing positions (12) and a goods lifting device (53) arranged on one of the rack store sides (9, 10), which goods lifting device (53) has transport devices (55a, 55b) able to be raised and lowered independently of each other, for transporting goods (3) between the rack levels (11), and a receiving device (61) which is able to be raised and lowered, for transporting the conveyor vehicle (4) between the rack levels (11), **characterized in that** the receiving device (61) comprises running rails (62a, 62b) which are in each case fastened to the transport devices (55a, 55b) and face one another, wherein the running rails (62a, 62b) with the transport devices (55a, 55b) are adjustable into a receiving position, in which the conveyor vehicle (4) is movable into a receiving position on the running rails (62a, 62b) and can be moved in said position between the rack levels (11) which lie one above another.

2. The rack storage system (52) according to claim 1, **characterized in that** the transport devices (55a, 55b) have storage zones respectively one behind another in the conveying direction.

3. The rack storage system (52) according to claim 1, **characterized in that** a first transport device (55a) is mounted on lift frame (57a) which is vertically adjustable via a first lift drive (56a), and a second transport device (55b) is mounted on a lift frame (57b) which is vertically adjustable via a second lift drive (56b), wherein the lift frames (57a, 57b) are guided on a single mast (58).

4. The rack storage system (52) according to claim 1, **characterized in that** a first transport device (55a) is mounted on a lift frame (57a) which is vertically adjustable via a first lift drive (56a) and a second transport device (55b) is mounted on a lift frame (57b) which is vertically adjustable via a second left drive (56b), wherein the lift frames (57a, 57b) are guided respectively on a mast (27a, 27b).

5. The rack storage system (52) according to claim 1, **characterized in that** the running rails (62a, 62b) for transporting the conveyor vehicle (4) between the rack levels (11) are held in the receiving position through electrical synchronous connection of the drive motors of the lift drives (56a, 56b) and are adjustable in a coupled manner relative to the rack levels (11).

6. The rack storage system (52) according to claim 1, **characterized in that** the transport devices (55a, 55b) for transporting the goods (3) between the rack levels (11) are adjustable independently of one another by controlling of the drive motors of the lift drives (56a, 56b) and respectively relative to the rack levels (11).

7. The rack storage system (52) according to claim 1, **characterized in that** the conveyor vehicle (4) is able to be locked in its receiving position between the running rails (62a, 62b) by means of a locking device (68, 69).

8. A method for operating a rack storage system (52) with a rack store (2) with store racks (7a, 7b) arranged adjacent to one another, between which at least one rack aisle (8) extends from a first rack store side (9) to a second rack store side (10) and which have storing positions (12) for goods (3) in rack levels (11) which lie one above another, and guide tracks (14a, 14b) running along the rack aisle (8) in the rack levels (11), and at least one autonomous conveyor vehicle (4) movable along the guide tracks (14a, 14b), wherein the goods (3) are conveyed to the rack store (2) and from the rack store (2) via transport devices (55a, 55b) which are able to be raised and lowered, and wherein the conveyor vehicle (4) can be transported between the rack levels (11) via a receiving device (61) which is able to be raised and lowered, and thereafter can be moved along the guide tracks (14a, 14b) in one of the rack levels (11), in order to collect at least one item of goods (3) from a storing position (12) or to deposit it onto a storing position (12), **characterized in that** the receiving device (61) comprises running rails (62a, 62b) which are in each case fastened to the transport devices (55a, 55b) and face one another, which are adjusted with the transport devices (55a, 55b) into a receiving position in which the conveyor vehicle (4) can be moved into a receiving position on the running rails (62a, 62b) and can be transported in said position between the rack levels (11) which lie one above another.

## Revendications

1. Système de stockage sur rayonnage (52) ayant un rayonnage (2) avec des rayons de stockage (7a, 7b) agencés les uns à côté des autres, entre lesquels au moins un couloir de rayonnage (8) s'étend depuis un premier côté de rayonnage (9) vers un second côté de rayonnage (10) et qui présente, dans des plans de rayonnage superposés (11), des emplacements de stockage (12) pour des marchandises (3), et des glissières de guidage (14a, 14b) s'étendant dans les plans de rayonnage (11) le long du couloir (8), et au moins un engin de convoyage (4) autonome pouvant se déplacer le long des glissières de guidage (14a, 14b) pour transporter les marchandises (3) jusqu'aux emplacements de stockage (12), et un dispositif élévateur de marchandise (53) agencé sur l'un des côtés de rayonnage (9, 10), lequel dispositif élévateur de marchandise (53) présente des dispositifs de transport (55a, 55b) pouvant être levés et abaissés, destinés au transport de marchandises de détail (3) entre les plans de rayonnage (11), et un dispositif de réception pouvant être levé et abaissé (61) pour le transport de l'engin de convoyage (4) entre les plans de rayonnage (11), **caractérisé en ce que** le dispositif de réception (61) présente des rails de roulement (62a, 62b) fixés chacun aux dispositifs de transport (55a, 55b) et se faisant face, de sorte que les rails de roulement (62a, 62b) peuvent être réglés avec les dispositifs de transport (55a, 55b) dans une position de réception, dans laquelle l'engin de convoyage (4) peut être amené dans une position de réception sur les rails de roulement (62a, 62b) et y être déplacé entre les plans de rayonnage superposés (11).

2. Système de stockage sur rayonnage (52) selon la revendication 1, **caractérisé en ce que** les dispositifs de transport (55a; 55b) ont chacun des zones de retenue successives dans la direction de transport.

3. Système de stockage sur rayonnage (52) selon la revendication 1, **caractérisé en ce que** sont réalisés un premier dispositif de transport (55a) sur un cadre de levage (57a) pouvant être ajusté verticalement par l'intermédiaire d'un premier entraînement de levage (56a), et un second dispositif de transport (55b) sur un cadre de levage (57b) pouvant être ajusté verticalement par l'intermédiaire d'un second entraînement de levage (56b), dans lequel les cadres de levage (57a; 57b) sont guidés sur un seul poteau (58).

4. Système de stockage sur rayonnage (52) selon la revendication 1, **caractérisé en ce que** sont réalisés un premier dispositif de transport (55a) sur un cadre de levage (57a) pouvant être ajusté verticalement par l'intermédiaire d'un premier entraînement de levage (56a), et un second dispositif de transport (55b) sur un cadre de levage (57b) pouvant être ajusté verticalement par l'intermédiaire d'un second entraînement de levage (56b), dans lequel les cadres de levage (57a; 57b) sont guidés chacun sur un poteau (27a, 27b).

5. Système de stockage sur rayonnage (52) selon la revendication 1, **caractérisé en ce que** les rails de roulement (62a, 62b) pour le transport de l'engin de convoyage (4) entre les plans de rayonnage (11) sont retenus dans la position de réception par l'intermédiaire d'un circuit électrique synchrone des moteurs d'entraînement des entraînements de levage (56a, 56b), et ajustables avec couplage par rapport aux plans de rayonnage (11).

6. Système de stockage sur rayonnage (52) selon la revendication 1, **caractérisé en ce que** les dispositifs de transport (55a, 55b) pour le transport des marchandises (3) entre les plans de rayonnage (11) sont ajustables en commandant les moteurs d'entraînement des entraînements de levage (56a, 56b) indépendamment l'un de l'autre, et chacun par rapport aux plans de rayonnage (11).

7. Système de stockage sur rayonnage (52) selon la revendication 1, **caractérisé en ce que** l'engin de convoyage (4) peut être verrouillé dans sa position de réception entre les rails de roulement (62a, 62b) au moyen d'un dispositif de verrouillage (68, 69).

8. Procédé pour faire fonctionner un système de stockage sur rayonnage (52) ayant un rayonnage (2) avec des rayons de stockage (7a, 7b) agencés les uns à côté des autres, entre lesquels au moins un couloir de rayonnage (8) s'étend depuis un premier côté de rayonnage (9) vers un second côté de rayonnage (10) et qui présentent, dans des plans de rayonnage superposés (11), des emplacements de stockage (12) pour des marchandises (3), et des glissières de guidage (14a, 14b) s'étendant dans les plans de rayonnage (11) le long du couloir (8), et au moins un engin de convoyage (4) autonome pouvant se déplacer le long des glissières de guidage (14a, 14b), dans lequel les marchandises (3) sont amenées jusqu'au rayonnage (2) par l'intermédiaire de dispositifs de transport (55a, 55b) pouvant être levés et abaissés, et enlevées du rayonnage (2), et dans lequel l'engin de convoyage (4) est transporté par un dispositif de réception pouvant être levé et abaissé (61) entre les plans de rayonnage (11), et ensuite conduit dans l'un des plans de rayonnage (11) le long des glissières de guidage (14a, 14b), pour enlever au moins une marchandise (3) de l'emplacement de stockage (12), ou pour la déposer sur l'emplacement de stockage (12), **caractérisé en ce que** le dispositif de réception (61) présente des rails de roulement (62a, 62b) fixés chacun aux dispositifs de transport (55a, 55b) et se faisant face, lesquels peuvent être réglés avec les dispositifs de transport (55a, 55b) dans une position de réception, dans laquelle l'engin de convoyage (4) peut être amené dans une position de réception sur les rails de roulement (62a, 62b), et y être transporté entre les plans de rayonnage superposés (11).
